# DEMANDE DE BREVET EUROPEEN

(11) **EP 2 896 952 A1**
(43) Date de publication de la demande: **22.07.2015**
(21) Numéro de dépôt: 15151147.4
(22) Date de dépôt: 14.01.2015
(51) Int. Cl.: G01M 17/10, B61K 9/00

(54) **Dispositif et procédé de surveillance d'un essieu ferroviaire**

(30) Priorité: 21.01.2014 FR 1450442
(71) Demandeur: SNCF MOBILITÉS, 93200 Saint-Denis (FR)
(72) Inventeur: Dahomay, Mike, 93270 Sevran (FR)
(74) Mandataire: Argyma

(57) **Abrégé**

Un dispositif de surveillance (5) d'un essieu ferroviaire (1) comportant un arbre longitudinal (10) sur lequel sont montées des roues (11) et au moins une boite de roulement (12) dans laquelle est guidé l'arbre longitudinal, le dispositif de surveillance (5) comportant un module d'entraînement (6) apte à entraîner en rotation ledit arbre longitudinal.

## Description

La présente invention concerne le domaine de la surveillance de matériel ferroviaire, en particulier, la surveillance d'un défaut d'une boite de roulement d'un essieu ferroviaire.

De manière connue, un véhicule ferroviaire comporte une pluralité de voitures comportant des bogies adaptés pour entrer en contact avec les rails d'une voie ferrée. Chaque bogie comporte de manière classique une paire d'essieux équipés chacun d'une paire de roues s'étendant transversalement à l'axe de l'essieu.

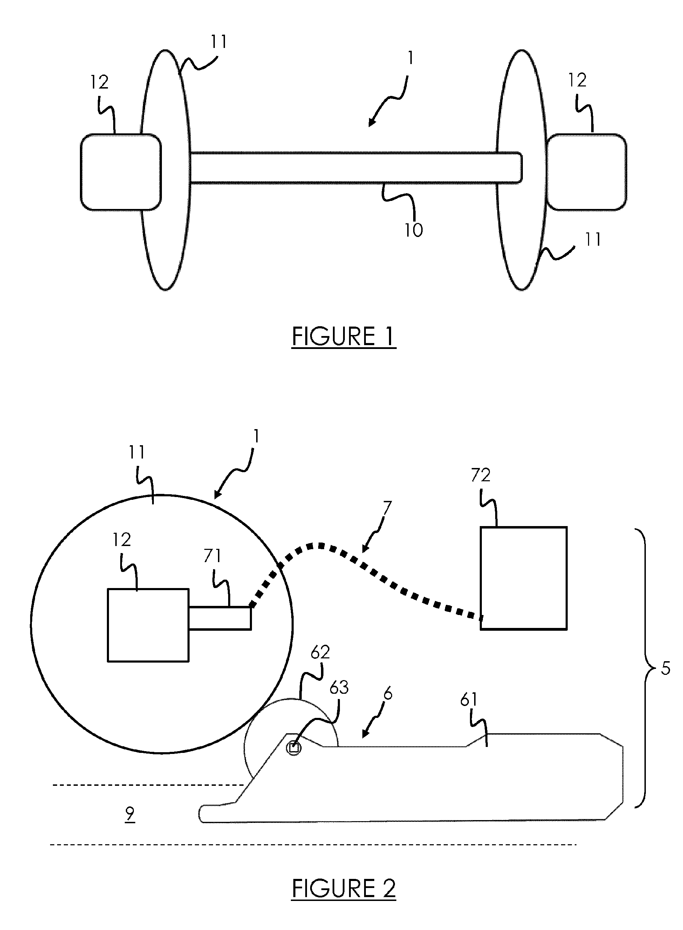

En référence à la figure 1, il est représenté un essieu 1 comportant un arbre longitudinal 10 sur lequel sont montées deux roues 11 ainsi que deux boites de roulement 12 adaptées pour assurer la liaison entre l'essieu et la structure du bogie, chaque boite de roulement 12 comportant un ou plusieurs roulements. De manière ordinaire, chaque roulement comprend une bague intérieure et une bague extérieure enserrant radialement des éléments roulants, par exemple, des billes. De manière connue, le roulement comporte en outre une cage pour bloquer tout mouvement latéral des éléments roulants.

Au cours de la vie d'un véhicule ferroviaire, chaque essieu 1 est soumis à de nombreux efforts mécaniques et doit être contrôlé afin de prévenir tout dysfonctionnement. A titre d'exemple, l'arbre 10 de l'essieu 1 peut subir des chocs et il est nécessaire de réaliser une opération de reprofilage afin de lui rendre sa forme initiale.

Des anomalies peuvent également affecter les boites de roulement 12 d'un essieu et plus particulièrement le fonctionnement du roulement.

A titre d'exemple, un élément roulant du roulement peut s'écailler, ce qui affecte sa symétrie de révolution. Ainsi, lors de rotation d'un élément roulant entre les bagues, il s'ensuit un frottement générateur de chaleur dans la boite de roulement 12. Ceci peut conduire à une modification de la structure de la graisse du roulement qui peut alors s'échapper de la boite de roulement 12.

Afin de surveiller l'apparition d'une anomalie d'une boite de roulement 12, certaines voies ferroviaires sont équipées de dispositifs de surveillance, connus de l'homme du métier sous la désignation de « détecteurs de boîtes chaudes », montés à proximité de la voie ferrée. De manière ordinaire, un tel dispositif de surveillance comporte un module infrarouge pour mesurer la température de chacune des boîtes de roulement 12 d'un essieu, lors du passage d'un véhicule ferroviaire.

En pratique, la fiabilité de la détection infrarouge dépend en particulier de la température extérieure, ce qui présente un inconvénient. En outre, en cas de détection d'un dysfonctionnement, il est nécessaire de conduire le véhicule ferroviaire dans un atelier de maintenance afin d'effectuer la réparation, ce qui engendre des coûts de maintenance élevés.

L'invention a donc pour but de remédier à ces inconvénients en proposant un procédé et un dispositif de surveillance préventive qui soit apte à détecter de manière fiable un défaut d'une boite de roulement.

### PRESENTATION GENERALE DE L'INVENTION

A cet effet, l'invention concerne un procédé de surveillance d'un essieu ferroviaire comportant un arbre longitudinal sur lequel sont montées des roues et au moins une boite de roulement dans laquelle est guidé l'arbre longitudinal, le procédé comportant :
- une étape de mise en rotation de l'arbre longitudinal de l'essieu dans la boite de roulement ;
- une étape d'acquisition d'un signal acoustique émis par ladite boite de roulement au cours de la rotation de l'arbre longitudinal de l'essieu ;
- une étape de comparaison d'un paramètre du signal acoustique à un seuil prédéterminé ; et
- une étape d'émission d'une alarme en cas de dépassement dudit seuil déterminé.

De manière avantageuse, un défaut d'une boite de roulement d'un essieu est détecté de manière acoustique et non plus thermique, ce qui permet d'améliorer la qualité de détection et ainsi limiter le risque de fausse alarme. En outre, une détection acoustique est rapide à mettre en oeuvre et ne nécessite pas le démontage des boites de roulement de l'essieu ferroviaire. Une analyse acoustique présente en outre l'avantage de pouvoir être mise en oeuvre aussi bien en atelier que sur une voie ferroviaire, ce qui simplifie le traitement de l'essieu en cas de défaillance par comparaison à un module infrarouge apte détecter « des boites chaudes » uniquement sur une voie ferroviaire après avoir fait rouler le véhicule ferroviaire. Grâce à l'invention, la détection d'un défaut et sa réparation peuvent être réalisées de manière préventive dans un atelier de maintenance.

De préférence, l'essieu est préalablement levé de manière à être libre en rotation. Ainsi, il n'est pas nécessaire de démonter l'essieu pour permettre sa surveillance, ce qui procure un gain de temps et facilite le travail des opérateurs. Dans l'art antérieur, lorsque l'essieu est monté et mis en rotation sur des rails, les ondes acoustiques relatives aux roulements se retrouvent noyées dans l'ensemble des ondes émises par le wagon et même par le train de manière plus large, ce qui rend difficile toute mesure fiable. En outre, les ondes issues des boites de roulements d'un autre essieu du même bogie peuvent également générer des perturbations. Il en va de même des autres équipements du wagon ou d'un autre wagon. Grâce à l'invention, à l'état levé, les ondes perturbatrices sont avantageusement diminuées.

De manière avantageuse, les signaux acoustiques peuvent être facilement exploités pour détecter une anomalie étant donné qu'ils correspondent uniquement à la boite de roulement analysée. En outre, la détection est précise. Il n'est aucunement nécessaire de réaliser une étape préliminaire de traitement consistant à isoler les signaux acoustiques recherchés.

Enfin, la détection d'anomalies lorsqu'un wagon est en circulation est bien plus complexe et coûteuse qu'une détection périodique en centre de maintenance au cours de laquelle l'essieu peut être analysé de manière pratique et rapide.

De manière préférée, l'arbre longitudinal de l'essieu est mis en rotation dans la boite de roulement par un module d'entraînement indépendant. Ainsi, les ondes acoustiques mesurées ne correspondent qu'aux ondes acoustiques de la boite de roulement et aux ondes acoustiques du module d'entraînement indépendant qui peuvent être aisément discriminées étant donné qu'elles sont connues et invariantes dans le temps.

De manière préférée, l'arbre longitudinal est mis en rotation à une vitesse supérieure à 60 tours par minute. Une telle vitesse de rotation permet de générer des signaux acoustiques caractéristiques en cas de défaut d'un roulement. La détection d'un défaut est ainsi particulièrement fiable.

L'invention concerne également un dispositif de surveillance pour la mise en oeuvre d'un procédé de surveillance d'un essieu ferroviaire tel que présenté précédemment, l'essieu ferroviaire comportant un arbre longitudinal sur lequel sont montées des roues et au moins une boite de roulement dans laquelle est guidé l'arbre longitudinal, le dispositif de surveillance comportant un module d'entraînement apte à entraîner en rotation ledit arbre longitudinal.

Un tel module d'entraînement permet d'entraîner en rotation l'arbre longitudinal de l'essieu afin de générer un signal acoustique caractéristique d'un défaut de la boite de roulement.

De manière préférée, le dispositif de surveillance comporte en outre un module de traitement comportant une sonde adaptée pour être placée en contact avec la boite de roulement de manière à acquérir un signal acoustique émis par la boite de roulement et un calculateur apte à comparer un paramètre du signal acoustique à un seuil prédéterminé et apte à émettre une alarme en cas de dépassement dudit seuil déterminé.

Une détection acoustique est rapide à mettre en oeuvre et ne nécessite pas le démontage des boites de roulement de l'essieu ferroviaire. Le signal acoustique est détecté directement sur la boite de roulement afin d'éviter toute déformation au cours de sa propagation. Une sonde est simple à manipuler et permet de surveiller de manière rapide et pratique les différentes boites de roulement d'un même essieu de manière successive.

De préférence, la sonde possède une tête aimantée afin d'éviter à l'opérateur de maintenir manuellement la sonde contre la boite de roulement, ce qui limite le risque de génération de signaux acoustiques parasites liés à la manipulation de l'opérateur.

De préférence, le module d'entraînement comporte au moins un galet de guidage apte à entrer en contact avec une roue de l'essieu pour l'entraîner en rotation. Un galet de guidage permet de contrôler de manière précise la vitesse de rotation de l'essieu afin de permettre la génération d'un signal acoustique caractéristique d'un défaut de la boite de roulement.

De manière préférée, le galet de guidage comporte un revêtement en plastique, de préférence, en polyuréthane. Ainsi, l'entraînement de la roue est régulier, ce qui améliore la génération d'un signal acoustique caractéristique d'un défaut de la boite de roulement.

Avantageusement, le module d'entraînement comporte un socle comprenant une entaille apte à coopérer avec un rail d'une voie ferrée. Le module d'entraînement est positionné de manière précise et stable à proximité de la roue ferroviaire pour permettre son entraînement.

De manière préférée, le galet de guidage s'étend au-dessus de l'entaille. Ainsi, le module d'entraînement possède un encombrement limité, ce qui facilite son transport d'essieu en essieu.

Selon un aspect préféré, le module d'entraînement comporte un moteur apte à entraîner en rotation le galet de guidage. Un moteur intégré permet de faciliter l'utilisation du module d'entraînement.

De manière préférée, le module d'entraînement et/ou le module de traitement sont portatifs. Ainsi, la surveillance d'une boite de roulement peut être réalisée directement sur les voies ferroviaires.

De manière préférée, le module d'entraînement comporte une butée apte à maintenir le galet de guidage avec la roue à entraîner. Ainsi, l'entraînement de l'arbre longitudinal est fluide même en cas de déplacement involontaire du module d'entraînement.

### PRESENTATION DES FIGURES

L'invention sera mieux comprise à la lecture de la description qui va suivre, donnée uniquement à titre d'exemple, et se référant aux dessins annexés sur lesquels :
- la figure 1 est une représentation schématique d'un essieu ferroviaire (déjà commentée) ;
- la figure 2 est une représentation schématique de côté d'un dispositif de surveillance selon une forme de réalisation de l'invention ;
- la figure 3 est une représentation schématique d'un roulement dont un élément roulant comporte un écaillage ;
- la figure 4 est une représentation rapprochée du roulement de la figure 3 ;
- la figure 5 est une représentation schématique de dessus du module d'entraînement du dispositif de surveillance de la figure 2 ;
- la figure 6 est une vue de côté du module d'entraînement de la figure 5 ; et
- la figure 7 est un organigramme fonctionnel représentant les étapes d'un procédé de surveillance selon une mise en oeuvre de l'invention.

Il faut noter que les figures exposent l'invention de manière détaillée pour mettre en oeuvre l'invention, lesdites figures pouvant bien entendu servir à mieux définir l'invention le cas échéant.

### DESCRIPTION D'UN OU PLUSIEURS MODES DE REALISATION ET DE MISE EN OEUVRE

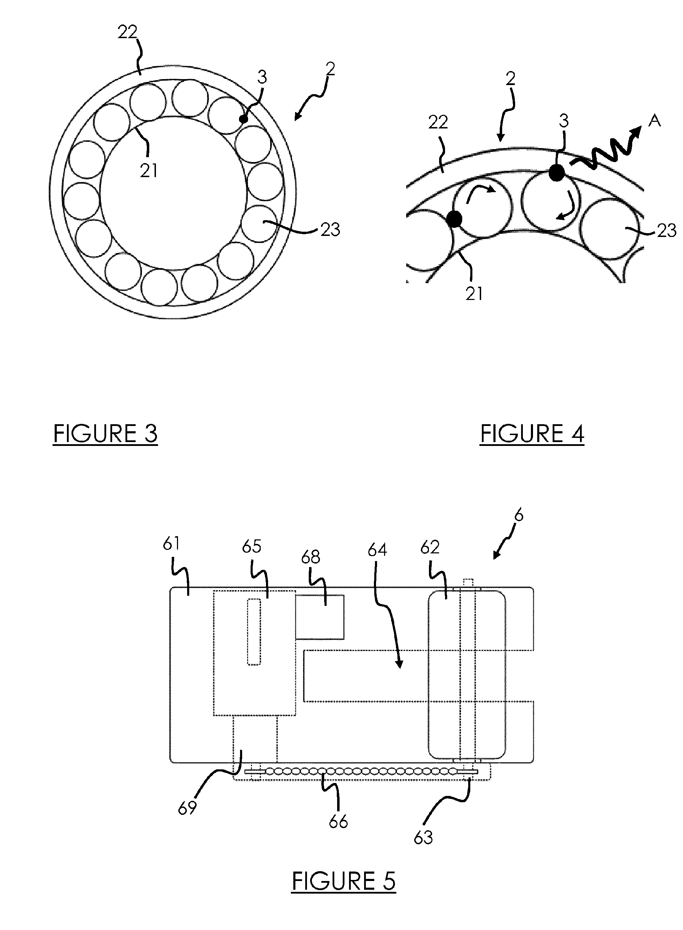

En référence à la figure 2, il est représenté un dispositif de surveillance 5 d'un essieu ferroviaire 1 selon une forme de réalisation préférée de l'invention. Comme déjà présenté à la figure 1, un essieu ferroviaire 1 comporte un arbre longitudinal 10 sur lequel sont montées deux roues 11 ainsi que deux boites de roulement 12 adaptées pour être fixées de manière à assurer la liaison entre l'essieu et la structure d'un bogie, chaque boite de roulement comportant un ou plusieurs roulements 2. En référence à la figure 3, chaque roulement 2 comprend une bague intérieure 21 et une bague extérieure 22 enserrant radialement des éléments roulants 23, par exemple, des billes. De manière connue, le roulement 2 comporte en outre une cage pour bloquer tout mouvement latéral des éléments roulants 23.

Au cours de la vie de l'essieu ferroviaire 1, les éléments roulants 23 des roulements 2 sont fortement sollicités. Un des défauts courants est l'apparition d'un écaillage 3 à la surface d'un élément roulant 23 comme illustré aux figures 3 et 4. Du fait de la présence de cet écaillage 3, il s'ensuit des efforts mécaniques importants sur les bagues 21, 22 lorsque l'élément roulant écaillé 23 se situe dans la zone de charge du roulement 2, c'est-à-dire, la zone du roulement qui reprend la plus grande partie du poids du bogie. Ces efforts mécaniques engendrent des frottements générateurs de chaleur, évoqués précédemment, mais également des ondes acoustiques A du fait du contact de l'écaillage 3 de l'élément roulant 23 avec la bague intérieure 21 ou la bague extérieure 22. A titre d'exemple, en référence à la figure 4, l'écaillage 3 d'un élément roulant 23 heurte la bague extérieure 22 du roulement 2 et génère une onde acoustique A qui est caractéristique de l'écaillage 3.

En référence à la figure 2, afin de permettre une détection fiable d'un défaut d'une boite de roulement 12, le dispositif de surveillance 5 comporte un module d'entraînement 6 apte à entraîner en rotation l'essieu ferroviaire 1 et un module de traitement 7 pour traiter le signal acoustique généré par la boite de roulement 12 lors de la rotation de l'essieu ferroviaire 1 afin d'en déduire un défaut, en particulier, un écaillage 3.

Toujours en référence à la figure 2, le module de traitement 7 comporte une sonde 71 pour acquérir le signal acoustique A émis par la boite de roulement 12 et un calculateur 72 pour, d'une part, comparer un paramètre du signal acoustique A acquis à un seuil prédéterminé et, d'autre part, émettre une alarme en cas de dépassement dudit seuil. Une détection acoustique est plus fiable qu'une détection thermique et permet d'éviter tout remplacement injustifié d'une boite de roulement 12. De manière préférée, la sonde 71 est une sonde ultrasonore manipulable à la main par un opérateur.

Dans une forme de réalisation préférée, le module de traitement 7 est portatif afin d'être utilisé sur une voie ferrée lorsque l'essieu ferroviaire 1 est en position montée sur son bogie. A titre d'exemple, le calculateur 72 comporte une carte électronique adaptée pour acquérir des signaux acoustiques A via la sonde acoustique 71 reliée au calculateur 72 comme illustré à la figure 2. Le calculateur 72 comporte en outre une mémoire dans laquelle est stockée la valeur seuil. Le calculateur 72 se présente de manière préférée sous la forme d'un ordinateur portable. De préférence, le calculateur 72 et la sonde 71 sont stockés dans une mallette afin de faciliter le transport du module de traitement 7.

De manière préférée, en référence à la figure 2, la sonde acoustique 71 comporte une tête aimantée afin d'être maintenue en contact avec la boite de roulement 12 de l'essieu ferroviaire 1. De manière préférée, la boite de roulement 12 comporte un corps métallique, ce qui permet une connexion magnétique de la sonde 71. Grâce à sa tête aimantée, la sonde 71 est maintenue sans l'aide d'un opérateur, ce qui limite tout risque de génération de signaux acoustiques parasites liés à la manipulation de la sonde 71 par l'opérateur. En outre, une liaison magnétique permet une connexion simple et rapide, ce qui est avantageux pour surveiller successivement une pluralité de boites de roulement 12.

De plus, du fait de ses dimensions réduites, le module de traitement 7 peut être transporté de bogie en bogie pour acquérir des signaux acoustiques de chaque boite de roulement 12.

En référence aux figures 2, 5 et 6, le module d'entraînement 6 comporte un socle longitudinal 61 et un galet de guidage 62 apte à entrer en contact avec une roue ferroviaire 11 de l'essieu ferroviaire 1 pour l'entraîner en rotation. Dans cet exemple, le galet de guidage 62 possède un diamètre de l'ordre de 120 mm et une largeur de l'ordre de 25 cm de manière à coopérer de manière optimale avec la surface de roulement de la roue 11. Dans cet exemple, le galet de guidage 62 est monté rotatif sur le socle 61 par l'intermédiaire d'un axe 63 s'étendant orthogonalement à l'axe selon lequel s'étend le socle 61.

De manière préférée, afin d'améliorer l'interaction entre le galet de guidage 62 et une roue ferroviaire 11, le galet de guidage 62 comporte un revêtement en plastique, de préférence, en polyuréthane.

Comme illustré à la figure 5, le socle 61 comporte une entaille longitudinale 64 apte à coopérer avec un rail d'une voie ferrée. De manière préférée, la largeur de l'entaille longitudinale 64 est de l'ordre de 100 mm. En référence à la figure 5, le socle 61 possède une forme de U et le galet de guidage 62 s'étend au-dessus de l'entaille 64.

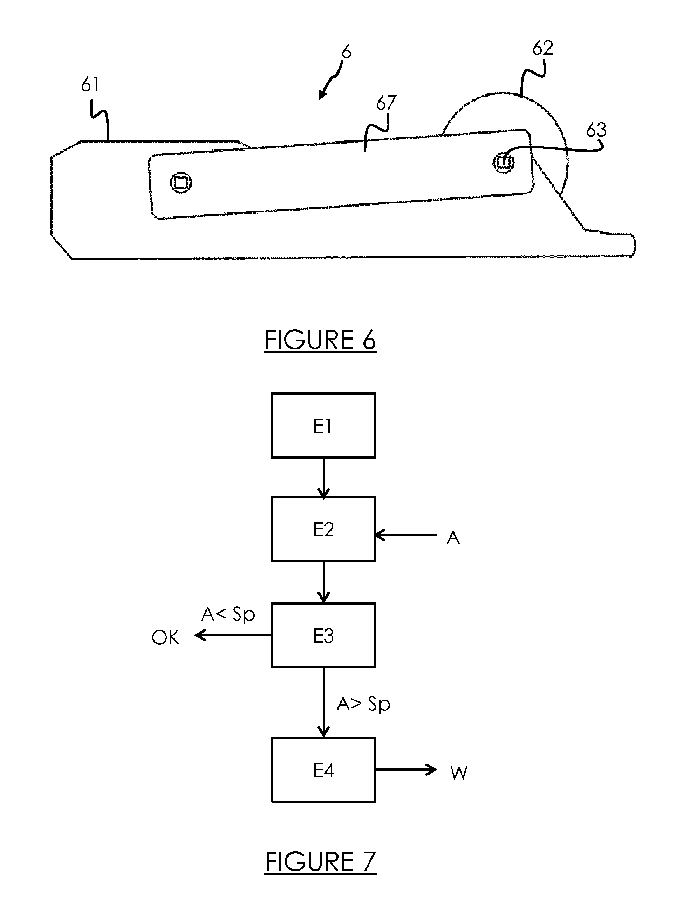

Pour permettre la mise en rotation du galet de guidage 62, le module d'entraînement comporte un moteur 65 relié au galet de guidage 62 par des moyens de transmission 66. Dans cette forme de réalisation, le moteur 65 est un moteur électrique asynchrone ayant une puissance de 750 Watts apte à tourner à une vitesse de 1000 tours/min. Les moyens de transmission 66 comportent, pour leur part, une chaine de liaison reliant un pignon denté de l'arbre du moteur 65 et un pignon denté de l'axe 63 du galet de guidage 62. Il va de soi que d'autres moyens de transmission pourraient également convenir. Comme illustré à la figure 6, les moyens de transmission 66 sont protégés par un capot 67.

En référence à la figure 5, le module d'entraînement 6 comporte en outre un variateur de vitesse 68 pour permettre une augmentation progressive de la vitesse du galet de guidage 62 ainsi qu'un réducteur de vitesse 69 afin de limiter la vitesse de rotation de l'arbre du moteur 65. Le variateur de vitesse 68 et le réducteur de vitesse 69 sont reliés au moteur 65.

Le module d'entraînement 6 est particulièrement avantageux étant donné qu'il offre une grande stabilité grâce à son socle entaillé 61. De plus, du fait de ses dimensions réduites, le module d'entraînement 6 peut être transporté de bogie en bogie pour entraîner chaque essieu ferroviaire 1. Le dispositif de surveillance 5 selon l'invention est avantageusement portatif.

Un exemple de mise en oeuvre de l'invention va être maintenant présenté en référence aux figures 2 et 7.

Afin de surveiller l'état d'une boite de roulement 12 d'un essieu ferroviaire 1, l'essieu ferroviaire 1 est levé au-dessus de ses rails 9 grâce à un dispositif de levage afin que ses roues 11 soient libres de tourner comme illustré à la figure 2.

Ensuite, la sonde 71 du module de traitement 7 est fixée à une boite de roulement 12 de l'essieu ferroviaire 1 à surveiller grâce à sa tête aimantée. Dans cette position, la sonde 71 est prête pour acquérir un signal acoustique dans des conditions optimales.

Ensuite, toujours en référence à la figure 2, le module d'entraînement 6 est placé sur le rail 9 de manière à ce que l'entaille 64 du socle 61 coopère avec la partie supérieure du rail 9 située sous la roue 11 à entraîner. En référence à la figure 2, le module d'entraînement 6 est disposé de manière à ce que son galet de guidage 62 soit contraint contre la surface de roulement de la roue ferroviaire 11. De manière préférée, le module d'entraînement 6 comporte une butée apte à bloquer la position du socle 61 par rapport au rail 9 et ainsi garantir que le galet de guidage 62 demeure en contact avec la roue ferroviaire 11. De préférence, la butée se présente sous la forme d'un vérin fixé à l'arrière du module d'entraînement 6, exerçant une force sur le module d'entraînement 6 en prenant appui sur un élément fixe du wagon ou fixé au sol de manière à contraindre le galet de guidage 62 contre la roue ferroviaire 11.

En référence à la figure 7, le procédé de surveillance comporte une première étape E1 de mise en rotation de l'arbre longitudinal 10 de l'essieu 1 dans ses boites de roulement 12 par le module d'entraînement 6. A cet effet, le moteur électrique 65 est activé pour entraîner en rotation le galet de guidage 62 autour de son axe 63 via ses moyens de transmission 66. Grâce au variateur de vitesse 68, la vitesse d'entraînement est progressive de manière à permettre une coopération optimale entre le galet de guidage 62 et la roue ferroviaire 11. Le galet de guidage 62 met en rotation la roue 11 de l'essieu ferroviaire 1, ce qui met en rotation l'arbre longitudinal 10 dans ses boites de roulement 12. De manière avantageuse, une mise en rotation d'une roue 11 de l'essieu ferroviaire 1 au lieu de son arbre longitudinal 10 permet de recourir à un galet de guidage 62 de diamètre réduit.

La vitesse de rotation du galet de guidage 62 est configurée de manière à obtenir une vitesse de rotation de l'essieu ferroviaire 1 supérieure à 60 tours/minute afin de générer un signal acoustique A caractéristique d'un défaut d'un roulement 2 de la boite de roulement 12 sur laquelle est fixée la sonde acoustique 71.

En référence à la figure 7, le procédé de surveillance comporte une deuxième étape E2 d'acquisition d'un signal acoustique A émis par la boite de roulement 12 sur laquelle est montée la sonde acoustique 71 au cours de la rotation de l'arbre longitudinal 10 de l'essieu 1. A titre d'exemple, en référence à la figure 4, le choc d'un écaillage 3 contre la bague extérieure 22 génère une onde acoustique A qui se propage dans la boite de roulement 12 et qui est reçue par la sonde acoustique 71 avant d'être interprétée de manière analogique ou numérique par le calculateur 72.

Comme la sonde 71 demeure immobile sur la boite de roulement 12, l'acquisition acoustique est dénuée de signaux acoustiques parasites, ce qui facilite un traitement ultérieur dudit signal acquis.

Le procédé de surveillance comporte une troisième étape E3 de comparaison d'un paramètre Ap du signal acoustique acquis A à un seuil prédéterminé S et une étape d'émission E4 d'une alarme W en cas de dépassement dudit seuil déterminé S. Dans cet exemple de mise en oeuvre, la valeur efficace (valeur RMS) du signal acoustique A est calculée par le calculateur 72 et est comparée à un seuil prédéterminé S obtenu par retour d'expérience. Il va de soi que d'autres paramètres Ap du signal acoustique A pourraient également être comparés, par exemple, une valeur crête à crête, une amplitude maximale, etc.

Si un roulement 2 de la boite de roulement 12 comporte un écaillage 3 tel que présenté aux figures 3 et 4, un signal acoustique caractéristique A est émis et sa valeur efficace Ap est calculée puis comparée à la valeur seuil S. En référence à la figure 7, en cas de dépassement dudit seuil S, une alarme W, visuelle ou sonore, est émise par le calculateur 72 afin de prévenir l'opérateur que la boite de roulement surveillée 12 comporte un défaut et nécessite une étape de maintenance. A défaut de dépassement, aucune alarme n'est émise et l'opérateur en déduit que la boite de roulement 12 est saine.

De manière préférée, l'opérateur réitère le procédé de surveillance pour l'autre boite de roulement 12 de l'essieu ferroviaire 1.

Grâce au dispositif de surveillance 5 selon l'invention, un grand nombre de boites de roulement 12 peut être contrôlé de manière rapide, pratique et fiable.

## Revendications

1. Procédé de surveillance d'un essieu ferroviaire (1) comportant un arbre longitudinal (10) sur lequel sont montées des roues (11) et au moins une boite de roulement (12) dans laquelle est guidé l'arbre longitudinal (10), le procédé comportant :
- une étape de mise en rotation de l'arbre longitudinal (10) de l'essieu (1) dans la boite de roulement (12), l'essieu (1) étant préalablement levé de manière à être libre en rotation ;
- une étape d'acquisition d'un signal acoustique (A) émis par ladite boite de roulement (12) au cours de la rotation de l'arbre longitudinal (10) de l'essieu (1) ;
- une étape de comparaison d'un paramètre (Ap) du signal acoustique (A) à un seuil prédéterminé (S) ; et
- une étape d'émission d'une alarme (W) en cas de dépassement dudit seuil déterminé (S).

2. Procédé selon la revendication 1, dans lequel l'arbre longitudinal (10) est mis en rotation à une vitesse supérieure à 60 tours par minute.

3. Procédé selon l'une des revendications 1 à 2, dans lequel l'arbre longitudinal (10) est mis en rotation dans la boite de roulement par un module d'entraînement indépendant (6).

4. Dispositif de surveillance (5) d'un essieu ferroviaire (1), pour la mise en oeuvre d'un procédé selon l'une des revendications 1 à 3, l'essieu ferroviaire (1) comportant un arbre longitudinal (10) sur lequel sont montées des roues (11) et au moins une boite de roulement (12) dans laquelle est guidé l'arbre longitudinal (10), le dispositif de surveillance (5) comportant un module d'entraînement portatif (6) apte à entraîner en rotation ledit arbre longitudinal (10).

5. Dispositif selon la revendication 4, dans lequel le module d'entraînement (6) comporte au moins un galet de guidage (62) apte à entrer en contact avec une roue (11) de l'essieu (1) pour l'entraîner en rotation.

6. Dispositif selon la revendication 5, dans lequel le galet de guidage (62) comporte un revêtement en plastique, de préférence, en polyuréthane.

7. Dispositif selon l'une des revendications 4 à 6, dans lequel le module d'entraînement (6) comporte un socle (61) comprenant une entaille (64) apte à coopérer avec un rail (7) d'une voie ferrée.

8. Dispositif selon les revendications 5 et 7, dans lequel le galet de guidage (62) s'étend au-dessus de l'entaille (64).

9. Dispositif selon l'une des revendications 5 à 8, dans lequel le module d'entraînement comporte un moteur (65) apte à entraîner en rotation le galet de guidage (62).

10. Dispositif selon l'une des revendications 5 à 9, dans lequel le dispositif de surveillance (5) comporte un module de traitement (7) comportant une sonde (71) adaptée pour être placée en contact avec la boite de roulement (12) de manière à acquérir un signal acoustique (A) émis par la boite de roulement (12) et un calculateur (72) apte à comparer un paramètre (Ap) du signal acoustique (A) à un seuil prédéterminé (S) et apte à émettre une alarme (W) en cas de dépassement dudit seuil déterminé (S).

11. Dispositif selon la revendication 10, dans lequel la sonde (71) possède une tête aimantée.
